# EUROPÄISCHE PATENTANMELDUNG

(11) **EP 0 878 816 A2**
(43) Veröffentlichungstag der Anmeldung: **18.11.1998**
(21) Anmeldenummer: 98105072.7
(22) Anmeldetag: 20.03.1998
(51) Int. Cl.: H01H 33/02

(54) **Metallgekapselter, gasisolierter Leistungsschalter**

(30) Priorität: 14.05.1997 DE 19720093
(71) Anmelder: ABB PATENT GmbH, 68309 Mannheim (DE)
(72) Erfinder: Fietsch, Gerhard, Dipl.-Ing., 67574 Osthofen (DE); Körber, Franz-Josef, Dipl.-Ing., 63674 Altenstadt (DE); Plettner, Horst, Dipl.-Ing., 63457 Hanau (DE); Rees, Volker, Dr.-Ing., 64289 Darmstadt (DE); Schalber, Horst, Dipl.-Ing., 61137 Schöneck (DE)
(74) Vertreter: Rupprecht, Klaus, Dipl.-Ing.

(57) **Zusammenfassung**

Die Erfindung betrifft einen metallgekapselten, gasisolierten Leistungsschalter für Freiluftausführung, mit einer der Anzahl der Phasen entsprechenden Anzahl von Leistungsschalterpolen, einem Trennschalter im Bereich wenigstens einer Seite der Kontaktstellen der Leistungsschalterpole, einem Erdungsschalter sowie je einem Strom- und Spannungswandler. Sie ist dadurch gekennzeichnet, daß die Leistungsschalterpole (21) in einem horizontal liegenden Gehäuse (10) untergebracht sind, daß im Bereich der Stirnenden des Gehäuses (10) senkrecht zur Mittelachse Anbaugehäuse (13, 14) anschließen, in denen Abgangsleiter (26, 26a, 26b) von den Leistungsschalterpolen (21) verlaufen, und daß an den Anbaugehäusen (13, 14) Isolierdurchführungen (15 bis 17; 18 bis 20) zu Kabelanschlüssen für eine Hochspannungsfreileitung angebracht sind.

## Beschreibung

Die Erfindung betrifft einen metallgekapselten, gasisolierten Leistungsschalter für Freiluftausführung gemäß dem Oberbegriff des Anspruches 1 sowie ein Verfahren gemäß dem Oberbegriff des Anspruches 6.

Eine Leistungsschaltereinheit in einer Freiluftschaltanlage umfaßt einen Hochspannungsleistungsschalter, einen Trennschalter sowie Spannungs- und Stromwandler, die jeweils getrennt aufgestellt sind und keine mechanische Einheit miteinander bilden. Wenn eine derartige Leistungsschalteranordnung revidiert oder überholt werden muß, dann müssen alle drei Komponenten freigeschaltet sein; während dieser Zeit können die nachfolgenden Netzteile nicht in Betrieb gehalten werden.

Aufgabe der Erfindung ist es, einen Leistungsschalter der eingangs genannten Art zu schaffen, mit dem auf einfache Weise eine Revidierung der Leistungsschaltereinheit möglich ist, ohne daß nachfolgende Netzteile längere Zeit abgeschaltet bleiben müssen.

Diese Aufgabe wird erfindungsgemäß bei einem Leistungsschalter gemäß dem Oberbegriff gelöst durch die kennzeichnenden Merkmale des Anspruches 1.

Danach sind die einzelnen Leistungsschalterpole in einem horizontal liegenden Gehäuse untergebracht. Im Bereich der Stirnenden des Gehäuses schließen senkrecht zur Mittelachse Anbaugehäuse an, in denen Abgangsleiter von den Leistungsschalterpolen verlaufen; an den Anbaugehäusen befinden sich Isolierdurchführungen zu Kabelanschlüssen.

Mit der erfindungsgemäßen Anordnung ist, wie weiter unten näher erläutert werden soll, ein einfacher Austausch von Leistungsschaltereinheiten in einer Freiluftschaltanlage möglich.

Gemäß einer weiteren Ausgestaltung der Erfindung umfaßt eines der Anbaugehäuse einen am Gehäuse anschließenden Stutzen, ein Zwischengehäuse und ein Abschlußgehäuse, an dem die Isolierdurchführungen angebracht sind; das Zwischengehäuse ist vom Stutzen und vom Abschlußgehäuse mittels Schottisolatoren getrennt und enthält Erdungsschalter, Trennschalter sowie einen Spannungswandleranschluß.

Gemäß einer bevorzugten Ausgestaltung der Erfindung kann im Bereich des Stutzens innerhalb des Gehäuses der Stromwandler vorgesehen sein.

Mit diesem erfindungsgemäßen Leistungsschalter kann ein Austausch von Schalterkomponenten in einer Freiluftschaltanlage wie folgt auf einfache Weise durchgeführt werden:
- Einschalten eines ersten Leistungsschalters in den Strompfad,
- Abschalten der auszutauschenden Komponenten,
- Einfügen eines zweiten Leistungsschalters in den Strompfad,
- Ausbau des ersten Leistungsschalters aus dem Strompfad.

Weitere vorteilhafte Ausgestaltungen und Verbesserungen der Erfindung ergeben sich aus den weiteren Unteransprüchen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine perspektivische Ansicht eines erfindungsgemäßen Leistungsschalters,
- Fig. 2: eine Längsschnittansicht durch den Leistungsschalter gemäß Fig. 1, und
- Fig. 3 bis 6: vier unterschiedliche Phasen des Austausches einer Leistungsschalterkomponente in einer Freiluftschaltanlage.

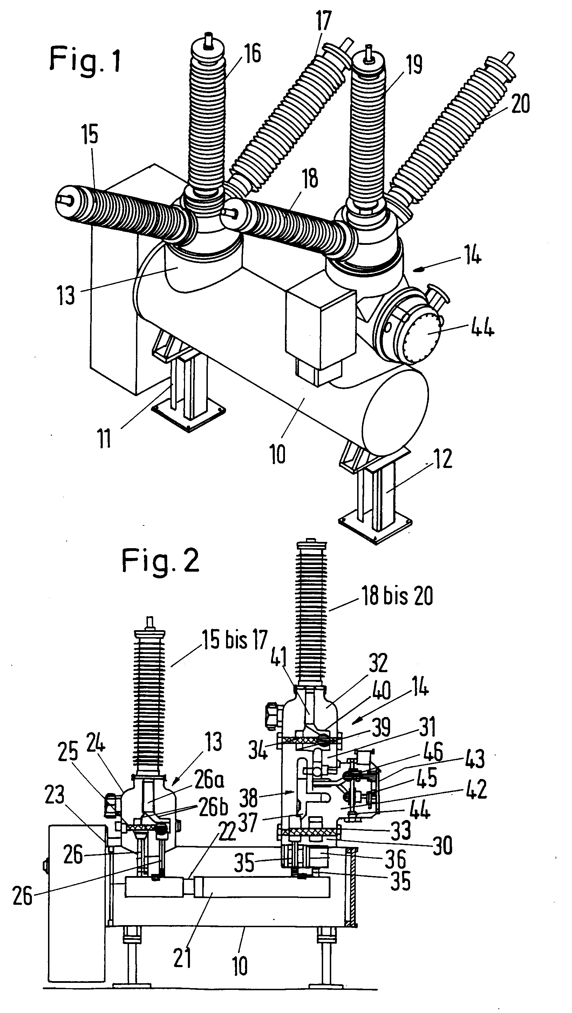

Der erfindungsgemäße Leistungsschalter gemäß Fig. 1 besitzt ein zylindrisches Gehäuse 10, das aus Metall hergestellt ist und mittels Pfosten 11 und 12 auf dem Boden aufgestellt ist. Senkrecht zu der Mittelachse des Gehäuses 10 sind Anschlußgehäuse 13 und 14 vorgesehen, deren Mittelachsen parallel zueinander und senkrecht zur Mittelachse des Gehäuses verlaufen. An den Anschlußgehäusen 13 und 14 sind Isolierdurchführungen 15, 16 und 17 bzw. 18, 19 und 20 angeschlossen, die in einer Ebene liegen und von denen jeweils die mittlere Isolierdurchführung 16 und 19 vertikal ausgerichtet ist. Die weiteren zugehörigen Isolierdurchführungen 15, 17; 18, 20 verlaufen unter einem Winkel von ca. 45° bis 50° zu der mittleren Isolierdurchführung 16, 19; die drei Isolierdurchführungen 15 bis 17 und 18 bis 20 liegen jeweils in einer Ebene, die senkrecht zur Mittelachse des Gehäuses 10 verlaufen.

Es sei nun Bezug genommen auf die Fig. 2.

Innerhalb des Gehäuses 10 befindet sich eine der Anzahl der Phasen entsprechende Anzahl von Leistungsschalterpolen 21, die, ebenso wie die Mittelachse des Gehäuses 10, horizontal verlaufen und nebeneinander angeordnet sind. Im Bereich 22 befindet sich die Kontaktstelle jedes Poles. Im Bereich des linken Stirnendes des Gehäuses 10 ist senkrecht zu dem Gehäuse 10 ein Stutzen 23 angeformt, an dem ein Abschlußgehäuse 24 unter Zwischenfügung eines Tragisolators 25 befestigt ist. Am äußeren Ende des Abschlußgehäuses 24 befinden sich die Isolierdurchführungen 15 bis 17. Innerhalb des Anschlußgehäuses 13 befinden sich Leiter 26, die aus einer Anordnung im Dreieck (nicht dargestellt) in eine Anordnung 26a in einer Ebene mittels geeignet geformter, vorzugsweise L-förmig ausgebildeter Zwischen- oder Übergangsstücke 26b zu den Durchführungen 15 bis 17 geführt sind.

Das Anschlußgehäuse 14 ist zusammengesetzt aus einem direkt am Gehäuse 10 befestigten Stutzen 30, einem Zwischengehäuse 31 und einem weiteren Abschlußgehäuse 32, welches im wesentlichen dem Abschlußgehäuse 24 entspricht. Zwischen dem Stutzen 30 und dem Zwischengehäuse 31 befindet sich ein Schottisolator 33, wogegen zwischen dem Zwischengehäuse 31 und dem Abschlußgehäuse 32 ein Tragisolator 34 eingesetzt ist, der selbstverständlich auch als Schottisolator ausgebildet sein kann. Um die direkt an den Leistungsschalterpolen 21 anschließenden Leiterzüge 35, die im Dreieck angeordnet sind, sind Stromwandler 36 herum angeordnet; oberhalb des Schottungsisolators 33 sind den L-förmigen Zwischenstücken 26b entsprechende Zwischenstücke 37 vorgesehen, an die sich ein Trennschalter 38 anschließt; ein solcher Trennschalter ist an sich bekannt. Die Ausgangskontakte des Trennschalters 38 sind mittels den Übergangsstücken 37 entsprechender Übergangsstücke 39 durch den Schottungsisolators 34 hindurchgeführt; an dem Schottungsisolator 34 schließen weitere Übergangsstücke 40 an, die dann in ein Leiterteilstück 41 übergehen, an denen die Isolierdurchführungen 18 bis 20 anschließen. An dem Zwischengehäuse 31 ist ein weiterer Stutzen 42 quer dazu angeformt, an dem eine Gehäusehaube 43 unter Zwischenfügung eines Schottisolators 44 befestigt ist, in der ein Spannungswandler 45 sowie ein Schnellerder 46 eingesetzt sind.

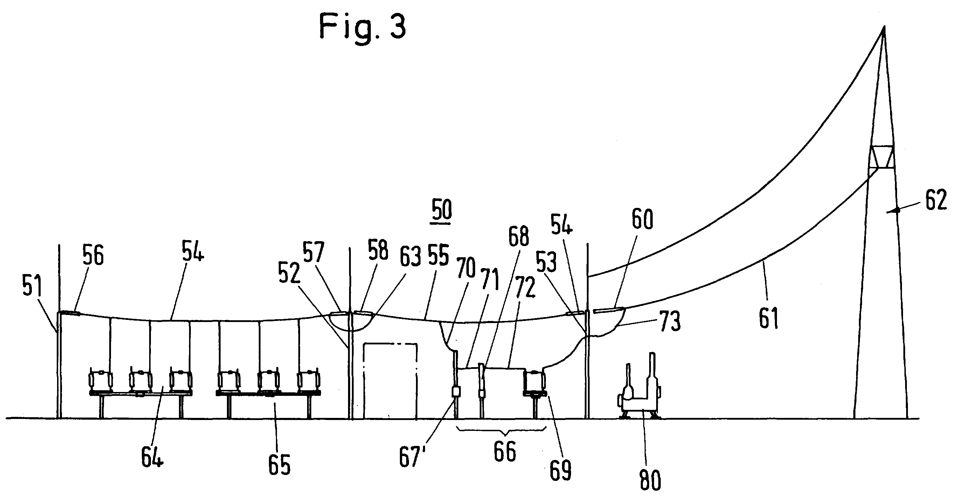

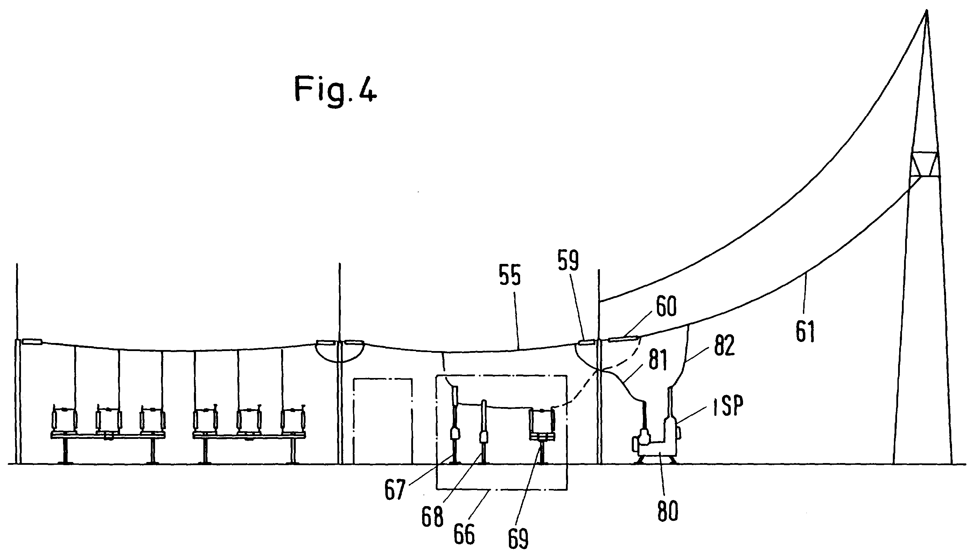

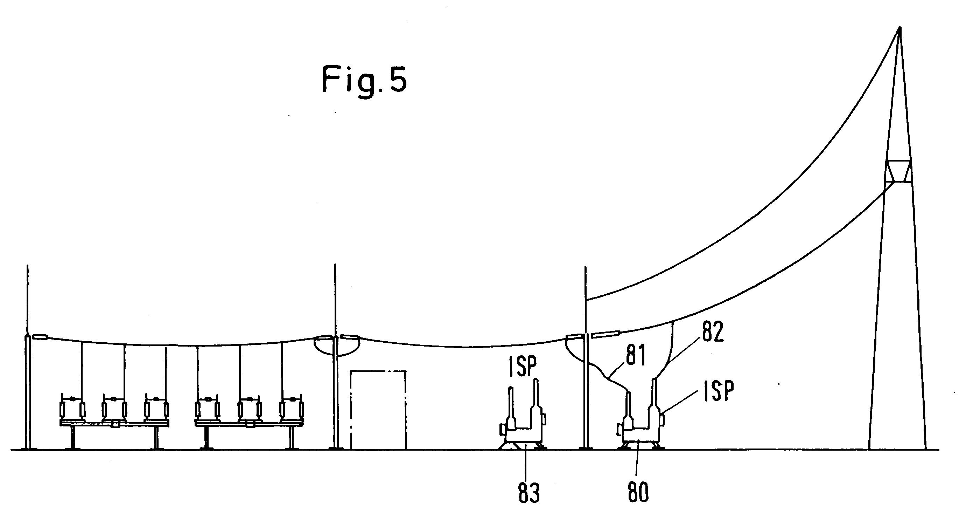

Dieser in den Fig. 1 und 2 dargestellte Leistungsschalter wird bei dem Verfahren, wie es im folgenden anhand der Fig. 3 bis 6 dargestellt werden soll, verwendet.

Die Fig. 3 zeigt im Querschnitt oder in Seitenansicht eine Freiluftschaltanlage 50 mit Abspannmasten 51, 52 und 53, an denen Kabelsammelschienen 54 und 55 angeschlossen sind, die an den Masten unter Zwischenfügung je eines Isolators 56, 57, 58, 59 und 60 über ein Leiterseil 61 mit einer Hochspannungsleitung 62 verbunden ist. Die Isolatoren 57, 58 sind mittels einer Überbrückung 63 miteinander elektrisch leitend verbunden.

Unterhalb der Kabelsammelschiene 54 befinden sich Trennschalteranordnungen 64, 65 sowie eine Leistungsschalteranordnung 66, die sich aus einem Freiluftleistungsschalter 67, einer Wandleranordnung 68 und einem Trennschalter 69 zusammensetzt. An der Kabelsammelschiene 55 ist der Leistungsschalter 67 mittels einer Leitung 70 angeschlossen; die einzelnen Komponenten 67 bis 69 sind mittels Leiterteilstücken 71 und 72 miteinander und mittels eines Leiterteilstückes 73 mit dem Leiter 61, der zur Hochspannungsleitung 62 führt, elektrisch leitend verbunden. Rechts neben dem Masten 53 ist schon ein erster Leistungsschalter 80, der identisch ist mit dem Leistungsschalter, der in den Fig. 1 und 2 beschrieben ist, aufgestellt.

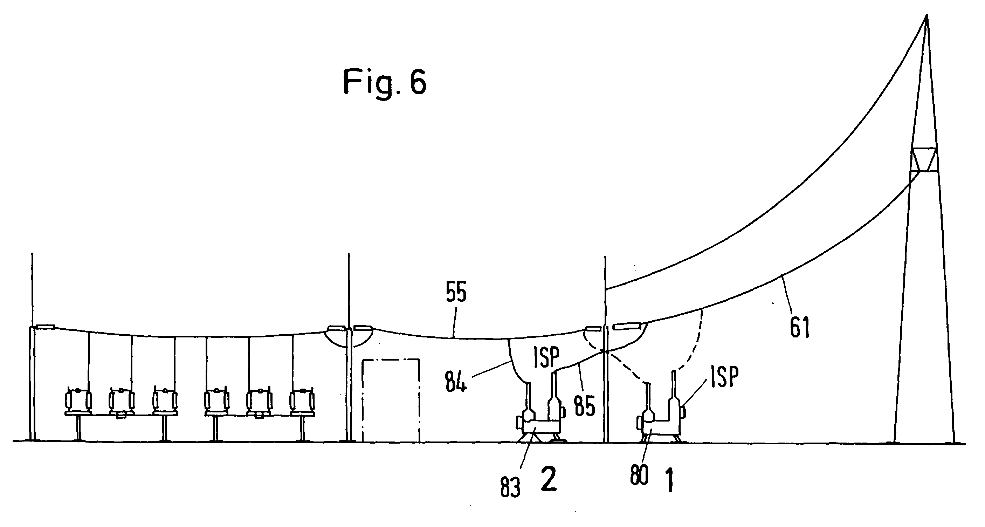

Wenn die Komponenten 67 bis 69 revidiert oder ausgetauscht werden müssen, dann wird der Leistungsschalter 80 mittels Anschlußleitern 81 und 82 einerseits mit den Kabelsammelschienen 55 und andererseits mit dem Leiter 61 elektrisch leitend verbunden; somit fließt der Strom nach Abschaltung der in dem strichpunktierten Teil 66 befindlichen Komponenten 67, 68 und 69 von den Kabelsammelschienen 55 über die Leiter 81 und 82 in den Leiter 61; dadurch werden die beiden Isolatoren 59 und 60 überbrückt. Dann können die Komponenten 66 ausgebaut werden; anstelle dieser Komponenten wird ein zweiter Leistungsschalter 83 eingesetzt, der, wie aus Fig. 6 ersichtlich, mit einem Leiterteilstück 84 mit dem Leiterstück 55 und mit einem weiteren Leiterteilstück 85 mit dem Leiter 61 verbunden wird. Nach Einschaltung des Schalters 83 können die Leiter 81 und 82 demontiert werden; der Leistungsschalter 80 kann entfernt werden.

Diese Methode bzw. diese Verfahrensweise ist somit sehr einfach. Man benötigt zwei Leistungsschalter gemäß den Fig. 1 und 2, von denen einer zum schnellen Austausch und der andere zum endgültigen Einbau anstelle der einzelnen Komponenten 67, 68 und 69 verwendet werden kann.

Mit dieser technisch einfachen, erfindungsgemäßen Lösung kann ein sehr einfacher, kostengünstiger und schneller Austausch von zu revidierenden oder zu erneuernden Komponenten erfolgen, ohne daß das nachfolgende Netz zu lange abgeschaltet bleiben muß.

## Patentansprüche

1. Metallgekapselter, gasisolierter Leistungsschalter für Freiluftausführung, mit einer der Anzahl der Phasen entsprechenden Anzahl von Leistungsschalterpolen, einem Trennschalter im Bereich wenigstens einer Seite der Kontaktstellen der Leistungsschalterpole, einem Erdungsschalter sowie je einem Strom- und Spannungswandler, dadurch gekennzeichnet, daß die Leistungsschalterpole (21) in einem horizontal liegenden Gehäuse (10) untergebracht sind, daß im Bereich der Stirnenden des Gehäuses (10) senkrecht zur Mittelachse Anbaugehäuse (13, 14) anschließen, in denen Abgangsleiter (26, 26a, 26b) von den Leistungsschalterpolen (21) verlaufen, und daß an den Anbaugehäusen (13, 14) Isolierdurchführungen (15 bis 17; 18 bis 20) zu Kabelanschlüssen für eine Hochspannungsfreileitung angebracht sind.

2. Leistungsschalter nach Anspruch 1, dadurch gekennzeichnet, daß eines der Anbaugehäuse (14) einen am Gehäuse anschließenden Stutzen (30), ein Zwischengehäuse (31) und ein Abschlußgehäuse (32), an dem die Isolierdurchführungen (18 bis 20) angebracht sind, aufweist, und daß das Zwischengehäuse (31) vom Stutzen (36) und ggf. auch vom Abschlußgehäuse (32) mittels Schottisolatoren (33, 34) getrennt ist und Trennschalter, Erdungsschalter sowie einen Spannungswandleranschluß enthält.

3. Leistungsschalter nach Anspruch 2, dadurch gekennzeichnet, daß im Bereich des Stutzen (30) innerhalb des Gehäuses (10) der Stromwandler (36) vorgesehen ist.

4. Leistungsschalter nach einem der vorherigen Ansprüche, dadurch gekennzeichnet, daß das andere Anbaugehäuse (13) einen am Gehäuse (10) angebrachten Stutzen (23) und ein damit verbundenes Abschlußgehäuse (24) aufweist, an dem die Durchführungen (15 bis 17) angebracht sind.

5. Leistungsschalter nach einem der vorherigen Ansprüche, dadurch gekennzeichnet, daß die zusammengehörigen Isolierdurchführungen (15 bis 17; 18 bis 20) je in einer Ebene liegen, die senkrecht zur Mittelachse des Gehäuses (10) verlaufen.

6. Verfahren zum Austausch von Schalterkomponenten in einer Freiluftschaltanlage zur Überholung oder Revision, mit wenigstens einem Leistungsschalter gemäß einem der vorherigen Ansprüche, gekennzeichnet durch folgende Schritte:
- Einschalten eines ersten Leistungsschalters in den Strompfad, parallel zu den auszutauschenden Komponenten,
- Abschalten der auszutauschenden Komponenten,
- Einfügen eines zweiten Leistungsschalters in den Strompfad anstelle der auszutauschenden Komponenten, und
- Ausbau des ersten Leistungsschalters aus dem Strompfad.
